# EUROPÄISCHE PATENTSCHRIFT

(11) **EP 3 048 244 B1**
(45) Veröffentlichungstag und Bekanntmachung des Hinweises auf die Patenterteilung: **11.09.2019**
(21) Anmeldenummer: 16152946.6
(22) Anmeldetag: 26.07.2010
(51) Int. Cl.: F01B 3/00, F02B 75/26, F02B 21/00

(54) **AXIALKOLBENMOTOR**
AXIAL PISTON MOTOR
MOTEUR A PISTONS AXIAUX

(30) Priorität: 24.07.2009 DE 102009034735
(43) Veröffentlichungstag der Anmeldung: 27.07.2016
(62) Teilanmeldung aus: 10754665.7
(73) Patentinhaber: GETAS Gesellschaft für thermodynamische Antriebssysteme mbH, 52351 Düren (DE)
(72) Erfinder: Voigt, Dieter, Dr.-Ing., 52074 Aachen (DE); Rohs, Ulrich, Dr., 52351 Düren (DE)
(74) Vertreter: Reuther, Martin

(56) Entgegenhaltungen:
- EP-A2- 1 035 310
- GB-A- 191 506 353
- US-A- 972 504
- US-A- 1 849 324
- US-A- 2 688 230
- US-A- 4 179 879
- US-A- 4 653 269
- US-A- 6 092 365

## Beschreibung

Die Erfindung betrifft einen Axialkolbenmotor und ein Verfahren zum Betrieb eines Axialkolbenmotors.

Axialkolbenmotoren sind hinlänglich aus dem Stand der Technik bekannt und kennzeichnen sich als energiewandelnde Maschinen, welche ausgangsseitig mechanische Rotationsenergie unter Zuhilfenahme wenigstens eines Kolbens bereitstellen, wobei der Kolben eine lineare Schwingbewegung durchführt, deren Ausrichtung im Wesentlichen koaxial zu der Drehachse der Rotationsenergie ausgerichtet ist.

Neben Axialkolbenmotoren, die beispielsweise nur mit Druckluft betrieben werden, sind auch Axialkolbenmotoren bekannt, denen Brennmittel zugeführt wird. Dieses Brennmittel kann mehrkomponentig, beispielsweise aus einem Kraftstoff und aus Luft, ausgebildet sein, wobei die Komponenten gemeinsam oder getrennt einer oder mehreren Brennkammern zugeführt werden.

In vorliegendem Fall bezeichnet somit der Begriff "Brennmittel" jegliches Material, welches an der Verbrennung teilnimmt oder mit den an der Verbrennung teilnehmenden Komponenten mitgeführt wird und den Axialkolbenmotor durchströmt. Das Brennmittel umfasst dann zumindest Brenn- bzw. Kraftstoff, wobei der Begriff "Kraftstoff" in vorliegendem Zusammenhang Brennstoff also jegliches Material beschreibt, welches über eine chemische oder sonstige Reaktion, insbesondere über eine Redoxreaktion, exotherm reagiert. Das Brennmittel kann darüber hinaus noch Komponenten, wie beispielsweise Luft aufweisen, die Materialien für die Reaktion des Kraftstoffs bereitstellen.

Insbesondere können Axialkolbenmotoren auch unter dem Prinzip der inneren kontinuierlichen Verbrennung (ikV) betrieben werden, nach welchem Brennmittel, also beispielsweise Kraftstoff und Luft, kontinuierlich einer Brennkammer oder mehreren Brennkammern zugeführt werden.

Axialkolbenmotoren können darüber hinaus einerseits mit rotierenden Kolben, und entsprechend rotierenden Zylindern, arbeiten, die sukzessive an einer Brennkammer vorbeigeführt werden.

Andererseits können Axialkolbenmotoren stationäre Zylinder aufweisen, wobei das Arbeitsmedium dann sukzessive auf die Zylinder entsprechend der gewünschten Belastungsreihenfolge verteilt wird.

Beispielsweise sind derartige stationäre Zylinder aufweisende ikV-Axialkolbenmotoren aus der EP 1 035 310 A2 und der WO 2009/062473 A2 bekannt, wobei in der EP 1 035 310 A2 ein Axialkolbenmotor offenbart ist, bei welchem die Brennmittelzufuhr und die Abgasabfuhr wärmeübertragend miteinander gekoppelt sind.

Die in der EP 1 035 310 A2 und der WO 2009/062473 A2 offenbarten Axialkolbenmotoren weisen darüber hinaus eine Trennung zwischen Arbeitszylindern und den entsprechenden Arbeitskolben und Verdichterzylindern und den entsprechenden Verdichterkolben auf, wobei die Verdichterzylinder auf der den Arbeitszylindern abgewandten Seite des Axialkolbenmotors vorgesehen sind. Insofern kann derartigen Axialkolbenmotoren eine Verdichter- und eine Arbeitsseite zugeordnet werden.

Es versteht sich, dass die Begriffe "Arbeitszylinder", "Arbeitskolben" und "Arbeitsseite" synonym verwendet werden zu den Begriffen "Expansionszylinder", "Expansionskolben" und "Expansionsseite" bzw. "Expanderzylinder", "Expanderkolben" und "Expanderseite" sowie zu den Begriffen "Expansionsstufe" bzw. "Expanderstufe", wobei eine "Expanderstufe" bzw. "Expansionsstufe" die Gesamtheit aller hierin befindlicher "Expansionszylinder" bzw. "Expanderzylinder" bezeichnet.

Es ist Aufgabe vorliegender Erfindung, den Wirkungsgrad eines Axialkolbenmotors durch einen Axialkolbenmotor sowie durch ein Verfahren zum Betrieb eines Axialkolbenmotors mit den Merkmalen der unabhängigen Ansprüche zu verbessern.

Diese Aufgabe wird durch einen Axialkolbenmotor gemäß Anspruch 1 gelöst.

Obgleich durch zwei Wärmeübertrager zunächst ein größerer Aufwand und komplexere Strömungsverhältnisse bedingt sind, ermöglicht der Einsatz zweier Wärmeübertrager wesentlich kürzere Wege zu dem Wärmeübertrager sowie eine energetisch günstigere Anordnung derselben. Hierdurch lässt sich der Wirkungsgrad des Axialkolbenmotors überraschenderweise erheblich erhöhen.

Dieses gilt insbesondere für Axialkolbenmotoren mit stationären Zylindern, in welchen die Kolben jeweils arbeiten, in Abweichung von Axialkolbenmotoren, bei denen die Zylinder, und mithin auch die Kolben, ebenfalls um die Drehachse rotieren, da letztere Anordnung lediglich eine Abgasleitung benötigen, an welcher die Zylinder vorbeigeführt werden.

Vorzugsweise sind die Wärmeübertrager im Wesentlichen axial angeordnet, wobei der Begriff "axial" in vorliegendem Zusammenhang eine Richtung parallel zur Hauptrotationsachse des Axialkolbenmotors bzw. parallel zur Drehachse der Rotationsenergie bezeichnet. Dieses ermöglicht eine besonders kompakte und mithin energiesparende Bauweise, was insbesondere auch gilt, wenn lediglich ein Wärmeübertrager, insbesondere jedoch wenn ein isolierter Wärmeübertrager, wie er nachstehend beschrieben und beansprucht ist, zur Anwendung kommt.

Weist der Axialkolbenmotor wenigstens vier Kolben auf, so ist es von Vorteil, wenn die Abgase wenigstens zweier benachbarter Kolben in jeweils einen Wärmeübertrager geleitet werden. Hierdurch können die Wege zwischen Kolben und Wärmeübertrager für die Abgase minimiert werden, so dass Verluste in Form von Abwärme, die nicht über die Wärmeübertrager zurückgewonnen werden kann, auf ein Minimum reduziert werden können.

Letzteres kann auch noch erreicht werden, wenn die Abgase dreier benachbarter Kolben jeweils in einen gemeinsamen Wärmeübertrager geleitet werden.

Andererseits ist es auch denkbar, dass der Axialkolbenmotor wenigstens zwei Kolben umfasst, wobei die Abgase jedes Kolbens in jeweils einen Wärmeübertrager geleitet werden. Insoweit kann es - je nach konkreter Umsetzung vorliegender Erfindung - vorteilhaft sein, wenn je Kolben ein Wärmeübertrager vorgesehen ist. Zwar bedingt dieses einen erhöhten baulichen Aufwand; andererseits können die Wärmeübertrager jeweils kleiner, und mithin baulich möglicherweise einfacher, ausgebildet sein, wodurch der Axialkolbenmotor insgesamt kompakter und somit mit geringeren Verlusten belastet baut. Insbesondere bei dieser Ausgestaltung, aber auch wenn für je zwei Kolben ein Wärmeübertrager vorgesehen ist, kann - ggf. - der jeweilige Wärmeübertrager in die Zwickel zwischen zwei Kolben integriert werden, wodurch der gesamte Axialkolbenmotor entsprechend kompakt ausgebildet werden kann.

Die Aufgabe vorliegender Erfindung wird, kumulativ bzw. alternativ zu den übrigen Merkmalen vorliegender Erfindung, durch einen Axialkolbenmotor mit einer Brennmittelzufuhr und einer Abgasabfuhr, die wärmeübertragend miteinander gekoppelt sind, gelöst, welcher sich durch wenigstens eine Wärmeübertragerisolation auszeichnet. Auf diese Weise kann gewährleistet werden, dass möglichst viel Wärmeenergie in dem Axialkolbenmotor verbleibt und über die Wärmeübertrager an das Brennmittel wieder übertragen wird.

In diesem Zusammenhang versteht es sich, dass die Wärmeübertragerisolation den Wärmeübertrager nicht zwingend vollständig umgeben muss, da gegebenenfalls einige Abwärme auch an anderer Stelle in dem Axialkolbenmotor vorteilhaft genutzt werden kann. Insbesondere jedoch nach außen hin sollte die Wärmeübertragerisolation vorgesehen sein.

Vorzugsweise ist die Wärmeübertragerisolation derart ausgelegt, dass sie zwischen Wärmeübertrager und Umgebung des Axialkolbenmotors einen maximalen Temperaturgradienten von 400 °C, insbesondere von wenigstens 380 °C, belässt. Insbesondere mit fortschreitender Wärmeübertragung, also zur Verdichterseite hin, kann der Temperaturgradient dann schnell wesentlich kleiner werden. Kumulativ bzw. alternativ hierzu kann die Wärmeübertragerisolation vorzugsweise derart ausgelegt werden, dass die Außentemperatur des Axialkolbenmotors im Bereich der Wärmeübertragerisolation 500 °C bzw. 480 °C nicht übersteigt. Auf diese Weise ist sichergestellt, dass die durch Wärmestrahlung und Wärmeleitung verlorene Energiemenge auf ein Minimum reduziert wird, da die Verluste bei noch höheren Temperaturen bzw. Temperaturgradienten überproportional ansteigen. Darüber hinaus tritt die Maximaltemperatur bzw. der maximale Temperaturgradient nur an einer kleinen Stelle auf, da im Übrigen die Temperatur des Wärmeübertragers zur Verdichterseite immer mehr abnimmt.

Vorzugsweise umfasst die Wärmeübertragerisolation zumindest eine Komponente aus einem von dem Wärmeübertrager abweichenden Material. Dieses Material kann dann auf seine Aufgabe als Isolation optimal ausgelegt sein und beispielsweise Asbest, Asbestersatz, Wasser, Abgas oder Luft umfassen, wobei die Wärmeübertragerisolation, insbesondere um Wärmeabtransport durch Materialbewegung zu minimieren, bei fluidischen Isolationsmaterialien ein Gehäuse aufweisen sollte, während bei festen Isolationsmaterialien ein Gehäuse zur Stabilisation oder als Schutz vorgesehen sein kann. Das Gehäuse kann insbesondere aus demselben Material wie das Mantelmaterial des Wärmeübertragers gebildet sein.

Die Verwendung eines Wärmeübertrages in einem vorstehend erläuterten Axialkolbenmotor kann durch das Auftreten besonders hoher Temperaturdifferenzen zwischen dem Eingang und zwischen dem Ausgang des Wärmeübertragers einerseits und zwischen dem wärmeaufnehmenden und wärmeabgebenden Teil des Wärmeübertrages andererseits zu Nachteilen aufgrund einer die Lebensdauer begrenzenden Schädigung des Werkstoffes führen. Um hieraus resultierenden Wärmespannungen und durch eine Schädigung auftretenden Verluste an Brennmittel oder Abgas zu begegnen, kann bei geeigneter Ausgestaltung ein Wärmeübertrager nach vorstehend beschriebenem Vorschlag vorteilhaft an seinen einer kritischen Spannung unterworfenen Stellen fast ausschließlich aus lediglich einem Werkstoff hergestellt werden. Selbst wenn letzteres nicht der Fall ist, werden durch die vorstehend beschriebene Lösung Materialspannungen vorteilhaft reduziert.

Es versteht sich, dass ein verwendetes Lot oder andere zur Befestigung oder Montage des Wärmeübertragers verwendete Mittel aus einem anderen Werkstoff bestehen können, insbesondere dann, wenn es sich nicht um Bereiche mit einer hohen thermischen Beanspruchung oder mit einer hohen Anforderung an Dichtigkeit handelt.

Denkbar ist auch die Verwendung zweier oder mehrerer Werkstoffe mit demselben thermischen Ausdehnungskoeffizienten, wodurch in ähnlicher Weise dem Auftreten von thermischen Spannungen im Werkstoff begegnet werden kann.

Zur Erstellung einer stoffschlüssigen und/oder kraftschlüssigen Verbindung zwischen dem Rohr und der Matrize wird weiterhin ein Verfahren zur Herstellung eines Wärmeübertragers vorgeschlagen, welches sich dadurch auszeichnet, dass der Stoffschluss zwischen dem Rohr und der Matrize durch Schweißen oder Löten erfolgt. Durch ein derartiges Verfahren wird in einfacher Art und Weise und besonders vorteilhaft die Dichtigkeit eines Wärmeübertrages sichergestellt. Es ist hierbei auch möglich als Schweiß- oder Lötwerkstoff wiederum einen dem Rohr oder der Matrize entsprechenden Werkstoff zu verwenden.

Der Kraftschluss zwischen dem Rohr und der Matrize kann alternativ bzw. kumulativ hierzu durch Schrumpfen erfolgen. Dieses hat wiederum den Vorteil, dass Wärmespannungen zwischen dem Rohr und der Matrize verhindert werden können, indem die Verwendung eines vom Werkstoff des Rohres bzw. der Matrize unterschiedlichen Werkstoffes, beispielsweise bei einer stoffschlüssigen Verbindung, vermieden wird. Auch kann die entsprechende Verbindung dann schnell und betriebssicher bereitgestellt werden.

Die Aufgabe der Erfindung wird von einem Axialkolbenmotor gemäß Anspruch 1 mit wenigstens einem Verdichterzylinder, mit wenigstens einem Arbeitszylinder und mit wenigstens einer Druckleitung, durch welche verdichtetes Brennmittel von dem Verdichterzylinder zu dem Arbeitszylinder geleitet wird, gelöst, welcher sich durch einen Brennmittelspeicher auszeichnet, in welchem verdichtetes Medium zwischengespeichert werden kann.

Durch einen derartigen Brennmittelspeicher kann insbesondere kurzzeitig eine erhöhte Leistung abgefragt werden, ohne dass zunächst über die Verdichter entsprechend mehr Brennmittel bereitgestellt werden muss. Dieses ist insbesondere dann von Vorteil, wenn die Verdichterkolben des Verdichters unmittelbar mit Arbeitskolben verbunden sind, da dann ein Mehr an Brennmittel lediglich durch eine erhöhte Arbeitsleistung, die letztlich ansonsten nur durch ein Mehr an Kraftstoff erzielt werden kann, bereitgestellt werden kann. Insoweit kann hierdurch bereits Kraftstoff gespart werden.

Auch kann das in dem Brennmittelspeicher gespeicherte Brennmittel beispielsweise für Startvorgänge des Axialkolbenmotors genutzt werden.

Vorzugsweise ist der Brennmittelspeicher zwischen dem Verdichterzylinder und einem Wärmeübertrager vorgesehen, so dass das Brennmittel, insbesondere zur Verbrennung vorgesehene Luft, noch kalt bzw. noch ohne dem Wärmeübertrager Energie entzogen zu haben in dem Brennmittelspeicher zwischengespeichert wird. Wie unmittelbar ersichtlich, wirkt sich dieses positiv auf die Energiebilanz des Axialkolbenmotors aus.

Insbesondere für längere Standzeiten ist es von Vorteil, wenn zwischen dem Verdichterzylinder und dem Brennmittelspeicher und/oder zwischen dem Brennmittelspeicher und dem Arbeitszylinder ein Ventil angeordnet ist. Auf diese Weise kann die Gefahr einer Leckage minimiert werden. Insbesondere ist es von Vorteil, wenn der Brennmittelspeicher über ein Ventil von der Druckleitung bzw. von den während eines normalen Betriebs Brennmittel führenden Baugruppen mittels eines Ventils getrennt werden kann. Auf diese Weise kann das Brennmittel in dem Brennmittelspeicher unbeeinflusst von den übrigen Betriebszuständen des Axialkolbenmotors gespeichert werden.

Darüber hinaus ist es auch von Vorteil, wenn die Druckleitung zwischen Verdichterzylinder und Arbeitszylinder ein Ventil aufweist, so dass die Brennmittelzufuhr vom Brennmittelspeicher insbesondere in Situationen, in denen kein Brennmittel benötigt wird, wie dieses beispielsweise bei Stillstand an einer Ampel oder bei Bremsvorgängen der Fall ist, betriebssicher unterbunden werden kann, auch wenn verdichterseitig wegen einer Bewegung des Axialkolbenmotors noch verdichtetes Brennmittel bereit gestellt wird. Insbesondere kann dann eine entsprechende Unterbrechung vorgenommen werden und das verdichterseitig bereitgestellte Brennmittel unmittelbar direkt in den Brennmittelspeicher gelangen, um dann beispielsweise für Anfahr- und Beschleunigungsprozesse sofort und unverzüglich zur Verfügung zu stehen.

Hierbei versteht es sich, dass - je nach konkreter Ausführungsform des Axialkolbenmotors - auch mehrere Druckleitungen vorgesehen sein können, die einzeln oder zusammen entsprechend abgesperrt bzw. mit einem Brennmittelspeicher verbunden werden können.

Eine sehr vorteilhafte Ausführungsvariante sieht mindestens zwei solcher Brennmittelspeicher vor, wodurch unterschiedliche Betriebszustände des Axialkolbenmotors noch differenzierter geregelt werden können.

Werden die mindestens zwei Brennmittelspeicher mit unterschiedlichen Drücken beladen, kann besonders schnell auf Betriebszustände innerhalb der Brennkammer Einfluss genommen werden, ohne dass beispielsweise Verzögerungen durch ein Eigenansprechverhalten von Regelventilen zu berücksichtigen sind. Insbesondere ist es möglich, dass die Aufladezeiten für die Speicher minimiert werden und insbesondere auch bei niedrigen Drücken bereits Brennmittel gespeichert werden kann, während gleichzeitig noch ein Speicher, der Brennmittel unter hohen Druck enthält, vorhanden ist.

Besonders vielfältige und ineinander greifende Regelungsmöglichkeiten können dementsprechend erreicht werden, wenn eine Druckregelung vorliegt, die für den ersten Brennmittelspeicher eine erste Druckuntergrenze und eine erste Druckobergrenze und für den zweiten Brennmittelspeicher eine zweite Druckuntergrenze und eine zweite Druckobergrenze festlegt, innerhalb derer ein Brennmittelspeicher mit Drücken beladen wird, wobei vorzugsweise die erste Druckobergrenze unter der zweiten Druckobergrenze und die erste Druckuntergrenze unter der zweiten Druckuntergrenze liegt. Insbesondere können die verwendeten Brennmittelspeicher in unterschiedlichen Druckintervallen betrieben werden, wodurch die von dem Axialkolbenmotor in Form von Brennmitteldruck bereitgestellte Energie noch effektiver genutzt werden kann.

Um etwa ein besonders schnelles Ansprechverhalten, insbesondere hinsichtlich eines sehr weiten Arbeitsspektrums, an dem Axialkolbenmotor realisieren zu können, ist es vorteilhaft, wenn die erste Druckobergrenze kleiner oder gleich der zweiten Druckuntergrenze ist. Durch derart gewählte Druckintervalle kann vorteilhafter Weise ein besonders weitgreifender Druckbereich bereitgestellt werden.

Ein Temperatursensor liefert auf einfache Weise einen aussagekräftigen Wert hinsichtlich der Qualität der Verbrennung bzw. hinsichtlich der Laufstabilität des Axialkolbenmotors. Als Temperatursensor kann jeder Sensor, beispielsweise ein Widerstandstemperaturfühler, ein Thermoelement, ein Infrarotsensor oder ähnliches zur Anwendung kommen.

Vorzugsweise ist der Vorbrennkammertemperatursensor derart ausgelegt bzw. angeordnet, dass er die Temperatur einer Flamme in der Vorbrennkammer bestimmt. Dieses ermöglicht ganz besonders entsprechend aussagekräftige Werte.

Der Axialkolbenmotor kann insbesondere eine Brennkammerregelung umfassen, welche den Vorbrennkammertemperatursensor als Eingangssensor umfasst und die Brennkammer derart regelt, dass die Vorkammertemperatur zwischen 1.000 °C und 1.500 °C liegt. Auf diese Weise kann über einen verhältnismäßig einfachen und mithin betriebssicheren und sehr schnellen Regelkreis gewährleistet werden, dass der Axialkolbenmotor äußerst wenig Schadstoffe produziert. Insbesondere die Gefahr, dass Ruß entsteht, lässt sich auf ein Minimum reduzieren.

Darüber hinaus kann der Axialkolbenmotor, und insbesondere auch unabhängig von den übrigen Merkmalen vorliegender Erfindung, kumulativ bzw. alternativ hierzu einen Abgastemperatursensor zur Bestimmung der Abgastemperatur umfassen.

Durch einen derartigen Abgastemperatursensor kann ebenfalls auf technisch einfache Weise der Betriebszustand einer kontinuierlich arbeitenden Brennkammer überprüft und geregelt werden. Eine derartige Regelung stellt insbesondere auf einfache Weise eine ausreichende und vollständige Verbrennung von Kraftstoff sicher, so dass der Axialkolbenmotor einen optimalen Wirkungsgrad bei minimalem Schadstoffausstoß aufweist.

Bevorzugt wird die Brennkammer derart geregelt, dass die Abgastemperatur in einem Betriebszustand, vorzugsweise im Leerlauf, zwischen 850 °C und 1.200 °C liegt. Letzteres kann beispielsweise durch die geeignete Aufgabe von Wasser und/oder ein geeignetes Vorwärmen des Brennmittels, insbesondere von Luft, geschehen, indem beispielsweise die Wassertemperatur oder Wassermenge oder aber der Anteil an in einem Wärmeübertrager vorgewärmter bzw. an nicht vorgewärmter Luft entsprechend des vorgenannten Erfordernisses gesteuert wird.

Es wird ein Axialkolbenmotor mit einer wenigstens einen Zylinder umfassenden Verdichterstufe, mit einer wenigstens einen Zylinder umfassenden Expanderstufe und mit wenigstens einem Wärmeübertrager vorgeschlagen, wobei der wärmeaufnehmende Teil Wärmeübertragers zwischen der Verdichterstufe und der Brennkammer angeordnet ist und der wärmeabgebende Teil des Wärmeübertragers zwischen der Expanderstufe und einer Umgebung angeordnet ist und wobei sich der Axialkolbenmotor dadurch auszeichnet, dass der wärmeaufnehmende und/oder der wärmeabgebende Teil des Wärmeübertragers stromabwärts und/oder stromaufwärts Mittel zur Aufgabe wenigstens eines Fluides aufweist.

Die Aufgabe eines Fluides in den Brennmittelstrom kann zu einer Erhöhung der Übertragungsleistung des Wärmeübertragers beitragen, indem beispielsweise durch die Aufgabe eines geeigneten Fluides die spezifische Wärmekapazität des Brennmittelstromes der spezifischen Wärmekapazität des Abgasstromes angeglichen werden oder aber über die spezifische Wärmekapazität des Abgasstromes hinaus angehoben werden kann. Die hierdurch beispielsweise vorteilhaft beeinflusste Wärmeübertragung vom Abgasstrom auf den Brennmittelstrom trägt dazu bei, dass eine höhere Wärmemenge in den Brennmittelstrom und somit in den Kreisprozess bei gleichbleibender Baugröße des Wärmeübertragers eingekoppelt werden kann, wodurch sich der thermodynamische Wirkungsgrad steigern lässt. Alternativ oder kumulativ kann auch dem Abgasstrom ein Fluid aufgegeben werden. Das aufgegebene Fluid kann hierbei beispielswiese ein erforderliches Hilfsmittel für eine nachgeschaltete Abgasnachbehandlung sein, welches durch eine im Wärmeübertrager ausgebildete turbulente Strömung ideal mit dem Abgasstrom vermischt werden kann, so dass somit ein nachgeschaltetes Abgasnachbehandlungssystem mit maximalem Wirkungsgrad betrieben werden kann.

Mit "stromabwärts" wird in diesem Fall diejenige Seite des Wärmeübertrager bezeichnet, aus welcher das jeweilige Fluide austritt, bzw. derjenigen Teil des Abgasstranges oder der Brennmittel führenden Verrohrung bezeichnet, in welche das Fluid nach Verlassen des Wärmeübertragers eintritt.

In Analogie hierzu wird mit "stromaufwärts" diejenige Seite des Wärmeübertrager bezeichnet, in welche das jeweilige Fluide eintritt, bzw. derjenigen Teil des Abgasstranges oder der Brennmittel führenden Verrohrung bezeichnet, aus welcher das Fluid in den Wärmeübertragers eintritt.

Insofern spielt es keine Rolle, ob die Aufgabe des Fluides unmittelbar in der näheren räumlichen Umgebung des Wärmeübertragers erfolgt oder ob die Aufgabe des Fluides räumlich weiter beabstandet erfolgt.

Als Fluid kann beispielsweise Wasser und/oder Brennstoff entsprechend aufgegeben werden. Dies hat den Vorteil, dass der Brennmittelstrom einerseits die zuvor beschriebenen Vorteile einer erhöhten spezifischen Wärmekapazität durch die Aufgabe von Wasser und/oder Brennstoff aufweist und andererseits die Gemischaufbereitung bereits im Wärmeübertrager bzw. vor der Brennkammer erfolgen kann und die Verbrennung in der Brennkammer mit einem möglichst örtlich homogenen Verbrennungsluftverhältnis erfolgen kann. Dies hat insbesondere auch den Vorteil, dass das Brennverfahren nicht oder nur sehr gering mit einer wirkungsgradverschlechternden, unvollständigen Verbrennung behaftet ist.

Für eine weitere Ausgestaltung eines Axialkolbenmotors wird vorgeschlagen, dass im wärmeabgebenden Teil des Wärmeübertragers oder stromabwärts des wärmeabgebenden Teils des Wärmeübertragers ein Wasserabscheider angeordnet ist. Durch die am Wärmeübertrager bestehende Temperatursenke könnte dampfförmiges Wasser auskondensieren und den nachfolgenden Abgasstrang durch Korrosion schädigen. Eine Schädigung des Abgasstranges kann durch diese Maßnahme vorteilhaft vermindert werden.

Es wird zudem ein Verfahren zum Betrieb eines Axialkolbenmotors mit einer wenigstens einen Zylinder umfassenden Verdichterstufe, mit einer wenigstens einen Zylinder umfassenden Expanderstufe, mit wenigstens einer Brennkammer zwischen der Verdichterstufe und der Expanderstufe und mit wenigstens einem Wärmeübertrager vorgeschlagen, wobei der wärmeaufnehmende Teil des Wärmeübertragers zwischen der Verdichterstufe und der Brennkammer angeordnet ist und der wärmeabgebende Teil des Wärmeübertragers zwischen der Expanderstufe und einer Umgebung angeordnet ist und wobei sich das Verfahren dadurch auszeichnet, dass dem durch den Wärmeübertrager strömende Brennmittelstrom und/oder dem durch den Wärmeübertrager strömende Abgasstrom wenigstens ein Fluid aufgegeben wird. Hierdurch kann - wie bereits vorstehend dargestellt - die wirkungsgradsteigernde Wärmeübertragung von einem in eine Umgebung geleiteten Abgasstrom zu einem Brennmittelstrom verbessert werden, indem die spezifische Wärmekapazität des Brennmittelstromes durch die Aufgabe eines Fluides erhöht und somit auch der Wärmestrom zum Brennmittelstrom erhöht wird. Die Rückkopplung eines Energiestromes in den Kreisprozess des Axialkolbenmotors kann hierbei bei geeigneter Verfahrensführung wiederum eine Wirkungsgradsteigerung, insbesondere eine Steigerung des thermodynamischen Wirkungsgerades, bewirken.

Vorteilhaft wird der Axialkolbenmotor derart betrieben, dass Wasser und/oder Brennstoff aufgegeben werden. Dieses Verfahren bewirkt, dass wiederum der Wirkungsgrad, insbesondere der Wirkungsgrad des Brennverfahrens, durch ideale Mischung im Wärmeübertrager und vor der Brennkammer erhöht werden kann.

Ebenso kann dem Abgasstrom, falls dies beispielsweise für eine Abgasnachbehandlung zweckdienlich ist, Brennstoff aufgegeben werden, sodass die Abgastemperatur im Wärmeübertrager oder nach dem Wärmeübertrager weiter angehoben werden kann. Ggf. kann hierdurch auch eine Nachverbrennung erfolgen, welche das Abgas in vorteilhafter Weise nachbehandelt und Schadstoffe minimiert. Eine im wärmeabgebenden Teil des Wärmeübertragers freigesetzte Wärme könnte somit auch mittelbar zur weiteren Erwärmung des Brennmittelstroms genutzt werden, so dass der Wirkungsgrad des Axialkolbenmotors hierdurch kaum negativ beeinflusst wird.

Um diesen Vorteil weiterhin umzusetzen, kann das Fluid stromabwärts und/oder stromaufwärts des Wärmeübertragers aufgegeben werden.

Kumulativ oder alternativ hierzu kann abgeschiedenes Wasser dem Brennmittelstrom und/oder dem Abgasstrom erneut aufgegeben werden. Im günstigsten Fall wird hierdurch ein geschlossener Wasserkreislauf realisiert, welchem von außen kein Wasser mehr zugeführt werden muss. Somit entsteht ein weiterer Vorteil dadurch, dass ein mit einem Axialkolbenmotor nach dieser Bauart ausgerüstetes Fahrzeug nicht mit Wasser, insbesondere nicht mit destilliertem Wasser, betankt werden muss.

Vorteilhaft wird die Aufgabe von Wasser und/oder Brennstoff zu einem definierten Zeitpunkt vor einem Stillstand des Axialkolbenmotors gestoppt und der Axialkolbenmotor bis zum Stillstand ohne eine Aufgabe von Wasser und/oder Kraftstoff betrieben. Das für einen Abgasstrang möglicherweise schädliche Wasser, welches sich in dem Abgasstrang absetzen kann, insbesondere wenn dieser erkaltet, kann durch dieses Verfahren vermieden werden. Vorteilhaft wird auch jegliches Wasser aus dem Axialkolbenmotor selbst vor dem Stillstand des Axialkolbenmotors entfernt, so dass keine Schädigung von Bauteilen des Axialkolbenmotors durch Wasser oder Wasserdampf, insbesondere während des Stillstandes, begünstigt wird.

Die Aufgabe vorliegender Erfindung wird kumulativ zu den vorgenannten Merkmalen von einem Axialkolbenmotor mit wenigstens einem Verdichterzylinder, mit wenigstens einem Arbeitszylinder und mit wenigstens einer Druckleitung, durch welche verdichtetes Brennmittel von dem Verdichterzylinder zu dem Arbeitszylinder geleitet wird, wobei sich der Axialkolbenmotor dadurch auszeichnet, dass dem Verdichterzylinder während eines Saughubs eines in dem Verdichterzylinder angeordneten Verdichterkolbens Wasser oder Wasserdampf aufgegeben wird.

Zum einen wird hierdurch eine hervorragende Verteilung des Wassers in dem Brennmittel gewährleistet. Zum anderen kann die durch das Wasser geänderte Verdichtungsenthalpie unkritisch in das Brennmittel eingebracht werden, ohne dass die Energiebilanz des gesamten Axialkolbenmotors durch die Wasseraufgabe zu nachteilig beeinflusst wird. Insbesondere kann hierdurch der Verdichtungsprozess einer isothermen Verdichtung angenähert werden, wodurch sich die Energiebilanz bei der Verdichtung optimieren lässt. Der Wasseranteil kann ergänzend - je nach konkreter Umsetzung und auch in Verbindung mit oben erläuterter Wasseraufgabe in Verbindung mit einem Wärmeübertrager - zur Temperaturregelung in der Brennkammer und/oder auch zur Schadstoffreduktion über chemische oder katalytische Reaktionen des Wassers genutzt werden.

Die Aufgabe von Wasser kann, je nach konkreter Umsetzung vorliegender Erfindung beispielsweise durch eine Dosierpumpe erfolgen. Durch ein Rückstoßventil kann auf eine Dosierpumpe verzichtet werden, da dann der Verdichterkolben bei seinem Saughub auch Wasser durch das Rückstoßventil ansaugen kann, welches beim Verdichten dann schließt. Letztere Umsetzung ist besonders dann vorteilhaft, wenn in der Wasserzuleitung noch ein Sicherheitsventil, beispielsweise ein Magnetventil, vorgesehen ist, um Leckagen bei einem Motorstillstand zu vermeiden.

Es versteht sich, dass ggf. auch noch an anderer Stelle dem Axialkolbenmotor Wasser aufgegeben werden kann.

Weitere Vorteile, Ziele und Eigenschaften vorliegender Erfindung werden anhand nachfolgender Beschreibung anliegender Zeichnung erläutert, in welcher beispielhaft verschieden Axialkolbenmotoren und deren Baugruppen dargestellt sind.

Es zeigen:
- Figur 1: eine schematische Schnittdarstellung eines ersten Axialkolbenmotors zur allgemeinen Erläuterung;
- Figur 2: eine schematische Aufsicht auf den Axialkolbenmotor nach Fig. 1;
- Figur 3: eine schematische Aufsicht auf einen zweiten Axialkolbenmotor in ähnlicher Darstellung wie Fig. 2 zur allgemeinen Erläuterung;
- Figur 4: eine schematische Schnittdarstellung eines dritten erfindungsgemäßen Axialkolbenmotors in ähnlicher Darstellung wie Fig. 1;
- Figur 5: eine schematische Schnittdarstellung eines Wärmeübertragers;
- Figur 6: eine schematische Schnittdarstellung eines weiteren Axialkolbenmotors mit einem Vorbrennertemperatursensor und zwei Abgastemperatursensoren zur allgemeinen Erläuterung; und
- Figur 7: eine schematische Darstellung eines Flansches für einen Wärmeübertrager mit einer hierin angeordneten Matrize zur Aufnahme für Rohre eines Wärmeübertragers.

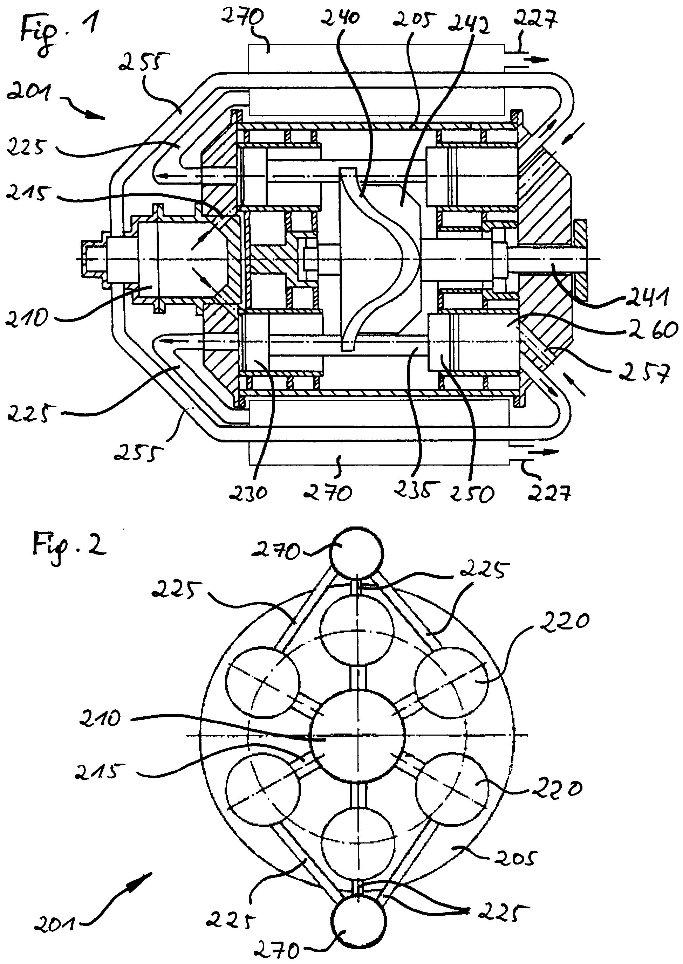

Der in Figuren 1 und 2 dargestellte Axialkolbenmotor 201 weist eine kontinuierlich arbeitende Brennkammer 210 auf, aus welcher sukzessive Arbeitsmedium über Schusskanäle 215 (exemplarisch beziffert) Arbeitszylindern 220 (exemplarisch beziffert) zugeführt wird. In den Arbeitszylindern 220 sind jeweils Arbeitskolben 230 (exemplarisch beziffert) angeordnet, welche über eine geradlinige Pleuelstange 235 einerseits mit einem Abtrieb, welcher bei diesem Aufführungsbeispiel als ein eine Kurvenbahn 240 tragender, auf einer Abtriebswelle 241 angeordneten Abstandhalter 242 realisiert ist, und andererseits mit einem Verdichterkolben 250 verbunden sind, welcher jeweils in weiter unten näher erläuterter Art und Weise in dem Verdichterzylinder 260 läuft.

Nachdem das Arbeitsmedium in dem Arbeitszylinder 220 seine Arbeit geleistet und den Arbeitskolben 230 entsprechend belastet hat, wird das Arbeitsmedium aus dem Arbeitszylinder 220 über Abgaskanäle 225 ausgestoßen. An den Abgaskanälen 225 sind nicht dargestellte Temperatursensoren vorgesehen, welche die Temperatur des Abgases messen.

Die Abgaskanäle 225 münden jeweils in Wärmeübertrager 270 und verlassen anschließend den Axialkolbenmotor 201 an entsprechenden Auslässen 227 in an sich bekannter Weise. Die Auslässe 227 können insbesondere ihrerseits wieder mit einem nicht dargestellten Ringkanal verbunden werden, so dass das Abgas letztlich den Motor 201 lediglich an einer oder zwei Stellen verlässt. Je nach konkreter Ausgestaltung insbesondere der Wärmeübertrager 270 kann gegebenenfalls auch auf einen Schalldämpfer verzichtet werden, da die Wärmeübertrager 270 selbst bereits eine schalldämpfende Wirkung haben.

Die Wärmeübertrager 270 dienen dazu Brennmittel, welches in den Verdichterzylindern 260 durch die Verdichterkolben 250 verdichtet und durch eine Druckleitung 255 zu der Brennkammer 210 geleitet wird, vorzuwärmen. Die Verdichtung erfolgt dabei in an sich bekannter Weise, indem Zuluft über Zuleitungen 257 (exemplarisch beziffert) von den Verdichterkolben 250 angesaugt und in den Verdichterzylindern 260 verdichtet wird. Hierzu finden an sich bekannte und ohne Weiteres entsprechend einsetzbare Ventilsysteme Anwendung.

Wie unmittelbar aus Figur 2 ersichtlich, weist der Axialkolbenmotor 201 zwei Wärmeübertrager 270 auf, die jeweils axial im Bezug auf den Axialkolbenmotor 201 angeordnet sind. Durch diese Anordnung lassen sich die Wege, welche das Abgas durch die Abgaskanäle 225 bis zu den Wärmeübertragern 270 jeweils durchlaufen muss, gegenüber Axialkolbenmotoren aus dem Stand der Technik erheblich reduzieren. Dieses hat zur Folge, dass letztlich das Abgas mit einer wesentlich höheren Temperatur den jeweiligen Wärmeübertrager 270 erreicht, so dass letztlich auch das Brennmittel auf entsprechend höhere Temperaturen vorgewärmt werden kann. In der Praxis hat sich herausgestellt, dass durch eine derartige Ausgestaltung mindestens 20 % Kraftstoff eingespart werden können. Hierbei wird davon ausgegangen, dass durch eine optimierte Auslegung sogar Einsparungen bis zu 30 % oder darüber möglich sind.

Darüber hinaus sind die Wärmeübertrager 270 mit einer hier nicht dargestellten Wärmeisolation aus Asbestersatz isoliert. Hierdurch ist gewährleistet, dass bei diesem Ausführungsbeispiel die Außentemperatur des Axialkolbenmotors im Bereich der Wärmeübertrager 270 bei nahezu allen Betriebszuständen 450 °C nicht übersteigt. Ausnahmen bilden nur Überlastsituationen, die ohnehin nur kurzzeitig auftreten. Hierbei ist die Wärmeisolation darauf ausgelegt, an der heißesten Stelle des Wärmeübertragers einen Temperaturgradienten von 350 °C zu gewährleisten.

In diesem Zusammenhang versteht es sich, dass der Wirkungsgrad des Axialkolbenmotors 201 durch weitere Maßnahmen erhöht werden kann. So kann das Brennmittel beispielsweise in an sich bekannter Weise zur Kühlung bzw. thermischen Isolierung der Brennkammer 210 genutzt werden, wodurch es noch weiter in seiner Temperatur erhöht werden kann, bevor es in die Brennkammer 210 gelangt. Hierbei sei betont, dass die entsprechende Temperierung einerseits lediglich auf Komponenten des Brennmittels beschränkt sein kann, wie dieses bei vorliegendem Ausführungsbeispiel in Bezug auf Verbrennungsluft der Fall ist. Auch ist es denkbar, der Verbrennungsluft bereits vor oder während der Verdichtung Wasser aufzugeben, dieses ist jedoch ohne Weiteres auch im Nachhinein, beispielsweise in der Druckleitung 255 möglich.

Besonders bevorzugt erfolgt die Aufgabe von Wasser in den Verdichterzylinder 260 während eines Saughubes des entsprechenden Verdichterkolbens 250, was eine isotherme Verdichtung bzw. eine einer isothermen Verdichtung möglichst angenäherte Verdichtung bedingt. Wie unmittelbar ersichtlich umfasst ein Arbeitszyklus des Verdichterkolbens 250 jeweils einen Saughub und einen Verdichtungshub, wobei während des Saughubs Brennmittel in den Verdichterzylinder 260 gelangt, welcher dann während des Verdichtungshubes komprimiert, also verdichtet, und in die Druckleitung 255 gefördert wird. Durch die Aufgabe von Wasser während des Saughubes kann eine gleichförmige Verteilung des Wassers auf betrieblich einfache Weise gewährleistet werden.

Ebenso ist es denkbar, bereits den Kraftstoff entsprechend zu temperieren, wobei dieses nicht zwingend notwendig ist, da die Kraftstoffmenge im Bezug auf die Verbrennungsluft in der Regel verhältnismäßig gering ist und somit sehr schnell auf hohe Temperaturen gebracht werden kann.

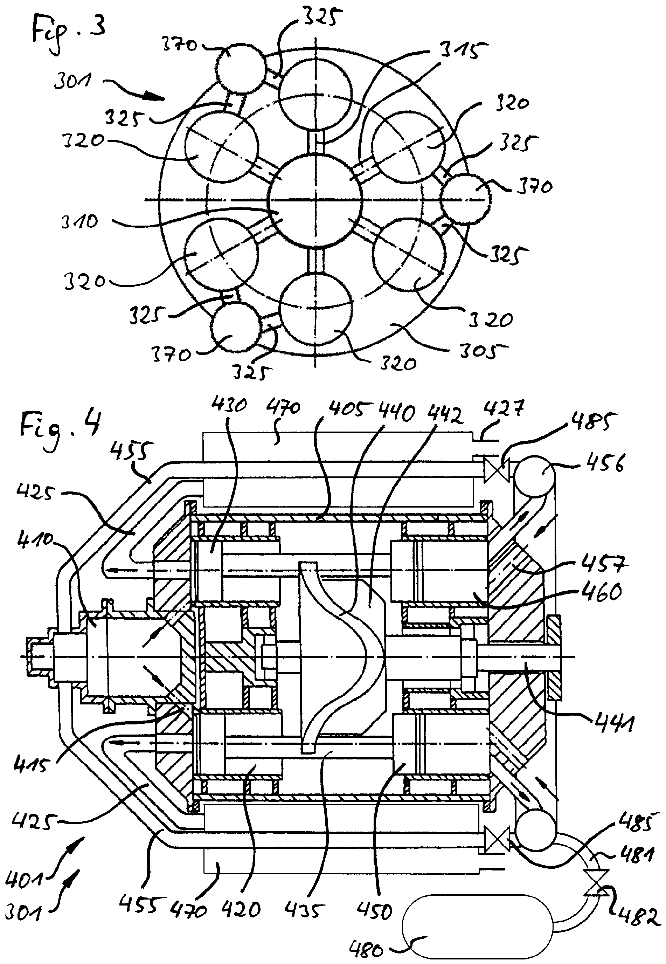

Der in Figur 3 dargestellte Axialkolbenmotor 301 entspricht in seinem Aufbau und in seiner Funktionsweise im Wesentlichen dem Axialkolbenmotor 201 nach Figuren 1 und 2. Aus diesem Grunde wird auf eine Detailbeschreibung verzichtet, wobei in Figur 3 ähnlich wirkende Baugruppen auch mit ähnlichem Bezugszeichen versehen sind und lediglich in der ersten Ziffer voneinander abweichen. Auch der Axialkolbenmotor 301 weist eine zentrale Brennkammer 310 auf, aus welcher über Schusskanäle 315 (exemplarisch beziffert) Arbeitsmedium im Arbeitszylinder 320 entsprechend der Arbeitsfolge des Axialkolbenmotors 301 geleitet werden kann. Das Arbeitsmedium wird, nachdem es seine Arbeit geleistet hat, über Abgaskanäle 325 jeweils Wärmeübertragern 370 zugeführt.

Hierbei weist der Axialkolbenmotor 301 in Abweichung von dem Axialkolbenmotor 201 je einen Wärmeübertrager 370 für genau zwei Arbeitszylinder 320 auf, wodurch sich die Länge der Kanäle 325 auf ein Minimum reduzieren lässt. Wie unmittelbar ersichtlich, sind bei diesem Ausführungsbeispiel die Wärmeübertrager 370 teilweise in den Gehäusekörper 305 des Axialkolbenmotors 301 eingelassen, was zu einer noch kompakteren Bauweise als die Bauweise des Axialkolbenmotors 201 nach Figuren 1 und 2 führt. Hierbei ist das Maß, wie weit die Wärmeübertrager 370 in den Gehäusekörper 305 eingelassen werden können, durch die Möglichkeit der Anordnung weiterer Baugruppen, wie beispielsweise einer Wasserkühlung für die Arbeitszylinder 220 begrenzt.

Auch der in Figur 4 dargestellte Axialkolbenmotor 401 entspricht im Wesentlichen den Axialkolbenmotoren 201 und 301 nach Figuren 1 bis 3. Dementsprechend sind auch identisch bzw. ähnlich wirkende Baugruppen ähnlich beziffert und unterscheiden sich lediglich durch die erste Stelle. Im Übrigen wird dementsprechend auch bei diesem Ausführungsbeispiel auf eine Detailerläuterung der Wirkungsweise verzichtet, da dieses bereits im Bezug auf den Axialkolbenmotor 201 nach Figuren 1 und 2 geschehen ist.

Der Axialkolbenmotor 401 umfasst ebenfalls einen Gehäusekörper 405, an welchem eine kontinuierlich arbeitende Brennkammer 410, sechs Arbeitszylinder 420 sowie sechs Verdichterzylinder 460 vorgesehen sind. Hierbei ist die Brennkammer 410 jeweils über Schusskanäle 415 mit den Arbeitszylindern 420 verbunden, so dass letzteren entsprechend der Taktfolge des Axialkolbenmotors 401 Arbeitsmedium den Arbeitszylindern 420 zugeführt werden kann.

Nach getaner Arbeit verlässt das Arbeitsmedium die Arbeitszylinder 420 jeweils durch Abgaskanäle 425, welche zu Wärmeübertragern 470 führen, wobei diese Wärmeübertrager 470 identisch den Wärmeübertragern 270 des Axialkolbenmotors 201 nach Figuren 1 und 2 (siehe insbesondere Figur 2) angeordnet sind. Das Arbeitsmedium verlässt die Wärmeübertrager 470 durch Auslässe 427 (exemplarisch beziffert).

In den Arbeitszylindern 420 bzw. den Verdichterzylindern 460 sind jeweils Arbeitskolben 430 bzw. Verdichterkolben 450 angeordnet, welche über eine starre Pleuelstange 435 mit einander verbunden sind. Die Pleuelstange 435 umfasst in an sich bekannter Weise eine Kurvenbahn 440, welche auf einem Abstandhalter 424 vorgesehen ist, welcher letztlich eine Abtriebswelle 441 antreibt.

Auch bei diesem Ausführungsbeispiel wird Verbrennungsluft über Zuleitungen 457 angesaugt und in den Verdichterzylindern 460 verdichtet, um über Druckleitungen 455 der Brennkammer 410 aufgegeben zu werden, wobei die bei den vorgenannten Ausführungsbeispielen genannten Maßnahmen je nach konkreter Umsetzung ebenfalls vorgesehen sein können.

Ergänzend sind bei dem Axialkolbenmotor 401 die Druckleitungen 455 über einen Ringkanal 456 miteinander verbunden, wodurch sich in an sich bekannter Weise ein gleichförmiger Druck in sämtlichen Druckleitungen 455 gewährleisten lässt. Zwischen dem Ringkanal 456 und den Druckleitungen 455 sind jeweils Ventile 485 vorgesehen, wodurch sich der Zufluss an Brennmittel durch die Druckleitungen 455 regeln bzw. einstellen lässt. Darüber hinaus ist an dem Ringkanal 456 ein Brennmittelspeicher 480 über eine Speicherleitung 481 angeschlossen, in welcher ebenfalls ein Ventil 482 angeordnet ist.

Die Ventile 482 und 485 können je nach Betriebszustand des Axialkolbenmotors 401 geöffnet oder geschlossen werden. So ist es beispielsweise denkbar, eines der Ventile 485 zu schließen, wenn der Axialkolbenmotor 401 weniger Brennmittel benötigt. Ebenso ist es denkbar, sämtliche Ventile 485 in derartigen Betriebssituationen teilweise zu schließen und diese als Drossel wirken zu lassen. Der Überschuss an Brennmittel kann dann dem Brennmittelspeicher 480 bei geöffnetem Ventil 482 zugeführt werden. Letzteres ist insbesondere auch dann möglich, wenn der Axialkolbenmotor 401 im Schubbetrieb läuft, d. h. überhaupt kein Brennmittel benötigt sondern über die Abtriebswelle 441angetrieben wird. Der durch die in einer derartigen Betriebssituation auftretende Bewegung der Verdichterkolben 450 bedingte Überschuss an Brennmittel kann dann ebenfalls ohne Weiteres in den Brennmittelspeicher 480 gespeichert werden.

Das auf diese Weise gespeicherte Brennmittel kann dem Axialkolbenmotor 401 bei Bedarf, insbesondere also bei Anfahr- oder Beschleunigungssituationen sowie zum Starten, ergänzend zugeführt werden, so dass ohne zusätzliche oder schnellere Bewegungen der Verdichterkolben 450 ein Überschuss an Brennmittel bereitgestellt wird.

Ggf. kann, um letzteres zu gewährleisten, auch auf die Ventile 482 und 485 verzichtet werden. Durch unvermeidliche Leckagen scheint ein Verzicht auf derartige Ventile für eine dauerhafte Speicherung verdichteten Brennmittels wenig geeignet.

In einer dem Axialkolbenmotor 401 alternativen Ausführungsform kann auf den Ringkanal 456 verzichtet werden, wobei dann - ggf. über ein Ringkanalteilstück - die Auslässe der Verdichterzylinder 460 entsprechend der Zahl der Druckleitungen 455 zusammengefasst werden. Bei einer derartigen Ausgestaltung kann es ggf. sinnvoll sein, lediglich eine der Druckleitungen 455 bzw. nicht sämtliche Druckleitungen 455 mit dem Brennmittelspeicher 480 zu verbinden bzw. verbindbar vorzusehen. Eine derartige Ausgestaltung bedingt zwar, dass im Schubbetrieb nicht sämtliche Verdichterkolben 450 den Brennmittelspeicher 480 befüllen können. Andererseits steht dann für die Brennkammer 410 ohne weitere regelungs- bzw. steuerungstechnische Maßnahmen ausreichend Brennmittel zur Verfügung, dass eine Verbrennung aufrecht erhalten werden kann. Parallel hierzu wird der Brennmittelspeicher 480 über die übrigen Verdichterkolben 450 befüllt, so dass entsprechend Brennmittel bevorratet und insbesondere für Start- bzw. Anfahr- oder Beschleunigungsphasen unmittelbar zur Verfügung steht.

Es versteht sich, dass der Axialkolbenmotor 401 in einer anderen hier nicht explizit gezeigten Ausführungsvarianten mit zwei Brennmittelspeichern 480 ausgerüstet werden kann, wobei die zwei Brennmittelspeicher 480 dann auch mit unterschiedlichen Drücken beladen werden können, sodass mit den zwei Brennmittelspeichern 480 in Echtzeit immer mit unterschiedlichen Druckintervallen gearbeitet werden kann. Vorzugsweise ist hierbei eine Druckregelung vorgesehen, die für den ersten Brennmittelspeicher 480 eine erste Druckuntergrenze und eine erste Druckobergrenze und für den zweiten Brennmittelspeicher (hier nicht gezeigt) eine zweite Druckuntergrenze und eine zweite Druckobergrenze festlegt, innerhalb derer ein Brennmittelspeicher 480 jeweils mit Drücken beladen wird, wobei die erste Druckobergrenze unter der zweiten Druckobergrenze und die erste Druckuntergrenze unter der zweiten Druckuntergrenze liegt. Speziell kann die erste Druckobergrenze kleiner oder gleich der zweiten Druckuntergrenze eingestellt werden.

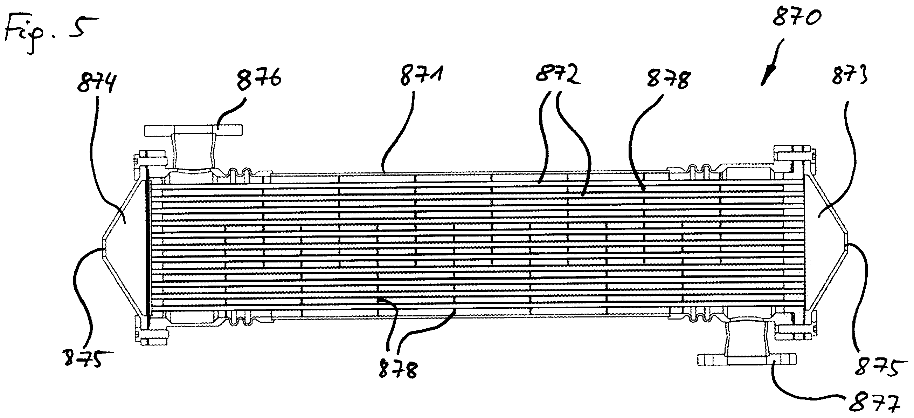

Als Wärmeübertrager 270, 370 bzw. 470 kann beispielsweise der in Figur 5 dargestellte Wärmeübertrager 870 zur Anwendung kommen. Dieser Wärmeübertrager 870 weist mehrere in einem Abgasraum 871 axial angeordnete Röhrchen 872 (exemplarisch beziffert) auf, welche gegenüber dem Abgasraum 871 gasdicht mit einem Zuluftraum 873 und einem Abluftraum 874 verbunden sind. Über Öffnungen 875 kann der Wärmeübertrager 870 in die Druckleitungen 255, 455 der vorgenannten Axialkolbenmotoren 201, 301, 401 eingebracht werden, so dass verdichtetes Brennmittel den Wärmeübertrager 870 durch die Röhrchen 872 durchströmen kann. Darüber hinaus weist der Abgasraum 871 einen Abgaseingang 876 und einen Abgasausgang 877 auf, wobei über Umlenkplatten 878, die versetzt in dem Abgasraum angeordnet und jeweils mit einem Teil der Röhrchen 872 verbunden sind, ein inniger Kontakt des Abgases mit den Röhrchen 872 gefördert wird. Da auch die Umlenkplatten 878 durch das Abgas entsprechend temperiert werden, führen auch die Umlenkplatten 878 zu einer entsprechenden Einkupplung thermischer Energie in die Röhrchen 872.

Der Abgaseingang 876 ist jeweils mit den Abgaskanälen 225, 325, 425 der Axialkolbenmotoren 201, 301, 401 verbunden, während der Abgasausgang 877 die Auslässe 227, 427 der Axialkolbenmotoren 201, 301, 401 darstellt. Es versteht sich, dass der Abgasausgang 877 in verschiedensten Ausführungen mit einem Auspuff oder weiteren, an sich bereits bekannten Baugruppen verbunden sein kann. Darüber hinaus versteht es sich, dass je nach konkreter Ausgestaltung die Axialkolbenmotoren 201, 301, 401 auch mit anderen Wärmeübertragern versehen sein können. Auch ist insbesondere nachvollziehbar, dass die Wärmeübertrager 870, insbesondere auch der Axialkolbenmotoren 301 und 401, auch wenn die Wärmeübertrager anders als die Wärmeübertrager 870 bauen sollten, entsprechend isoliert sein können, wie dieses anhand des Axialkolbenmotors 201 beschreiben ist.

In den Figuren 1 bis 5 nicht dargestellt sind Temperatursensoren zur Temperaturmessung des Abgases bzw. in der Brennkammer. Als derartige Temperatursensoren kommen alle Temperatursensoren in Frage, die betriebssicher Temperaturen zwischen 800 °C und 1.100 °C messen können. Insbesondere wenn die Brennkammer eine Vorbrennkammer und eine Hauptbrennkammer umfasst, kann über derartige Temperatursensoren auch die Temperatur der Vorbrennkammer gemessen werden. Insoweit können die vorstehend beschriebenen Axialkolbenmotoren 201, 301 und 401 jeweils über die Temperatursensoren derart geregelt werden, dass die Abgastemperatur bei Verlassen der Arbeitszylinder 220, 320, 420 ungefähr 900 °C und - falls vorhanden - die Temperatur in der Vorbrennkammer ungefähr 1.000 °C beträgt.

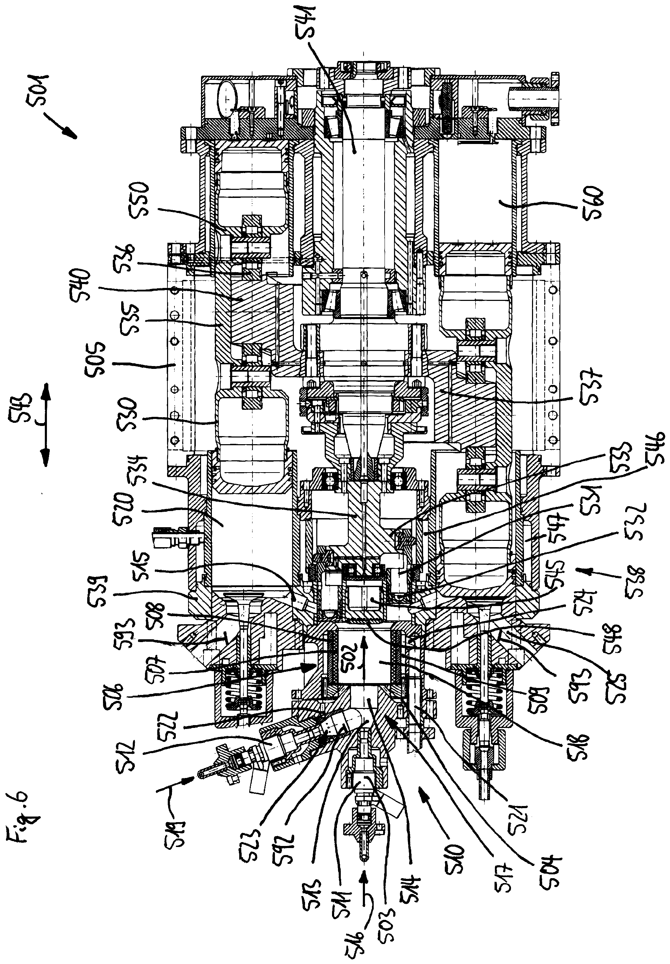

Bei dem gemäß der Darstellung nach der Figur 6 gezeigten weiteren Axialkolbenmotor 501 sind derartige Temperatursensoren in Gestalt eines Vorkammertemperatursensors 592 und zweier Abgastemperatursensoren 593 vorhanden und entsprechend schematisch dargestellt. Insbesondere mittels des Vorkammertemperatursensors 592 - welcher in diesem Ausführungsbeispiel auf Grund seiner Nähe zu einem Vorbrenner 517 des weiteren Axialkolbenmotors 501 auch als Vorbrennertemperatursensor 592 bezeichnet werden kann - wird ein aussagekräftiger Wert über die Qualität der Verbrennung bzw. hinsichtlich der Laufstabilität des weiteren Axialkolbenmotors 501 ermittelt. Beispielsweise kann eine Flammtemperatur im Vorbrenner 517 gemessen werden, um mittels einer Brennkammerregelung unterschiedliche Betriebszustände an dem weiteren Axialkolbenmotor 501 regeln zu können. Mittels der Abgastemperatursensoren 593, welche an Auslässen bzw. Abgaskanälen 525 des jeweiligen Arbeitszylinders 520 sitzen, kann kumulativ speziell der Betriebszustand der Brennkammer 510 geprüft und gegebenenfalls geregelt werden, sodass stets eine optimale Verbrennung der Brennmittel gewährleistet ist.

Ansonsten entsprechen der Aufbau und die Funktionsweise des weiteren Axialkolbenmotors 501 denen der zuvor beschriebenen Axialkolbenmotoren. Insofern weist der weitere Axialkolbenmotor 501 einen Gehäusekörper 505 auf, an welchem eine kontinuierlich arbeitende Brennkammer 510, sechs Arbeitszylinder 520 sowie sechs Verdichterzylinder 560 vorgesehen sind.

Innerhalb der Brennkammer 510 können Brennmittel sowohl gezündet als auch verbrannt werden, wobei die Brennkammer 510 mit Brennmitteln in der vorstehend beschriebenen Weise beschickt werden kann. Vorteilhafterweise arbeitet der weitere Axialkolbenmotor 501 mit einer Zweistufenverbrennung, wozu die Brennkammer 510 den vorstehend schon erwähnten Vorbrenner 517 und einen Hauptbrenner 518 aufweist. In den Vorbrenner 517 und in den Hauptbrenner 518 können Brennmittel eingespritzt werden, wobei insbesondere in den Vorbrenner 517 auch ein Anteil einer Verbrennungsluft des Axialkolbenmotors 501 eingeleitet werden kann, der speziell in diesem Ausführungsbeispiel kleiner als 15% der gesamten Verbrennungsluft betragen kann.

Der Vorbrenner 517 weist einen kleineren Durchmesser als der Hauptbrenner 518 auf, wobei die Brennkammer 510 einen Übergangsbereich aufweist, der eine konische Kammer 513 und eine zylindrische Kammer 514 umfasst.

Zum Zuleiten von Brennmitteln bzw. von Verbrennungsluft münden in die Brennkammer 510, insbesondere in die diesbezügliche konische Kammer 513, einerseits eine Hauptdüse 511 und andererseits eine Aufbereitungsdüse 512. Mittels der Hauptdüse 511 und der Aufbereitungsdüse 512 können Brennmittel bzw. Brennstoff in die Brennkammer 510 eingedüst werden, wobei bei diesem Ausführungseispiel die mittels der Aufbereitungsdüse 512 eingedüsten Brennmittel bereits mit Verbrennungsluft vermischt werden bzw. sind.

Die Hauptdüse 511 ist im Wesentlichen parallel zu einer Hauptbrennrichtung 502 der Brennkammer 510 ausgerichtet. Darüber hinaus ist die Hauptdüse 511 koaxial zu einer Symmetrieachse 503 der Brennkammer 510 ausgerichtet, wobei die Symmetrieachse 503 parallel zur Hauptbrennrichtung 502 liegt.

Die Aufbereitungsdüse 512 ist des Weiteren gegenüber der Hauptdüse 511 in einem Winkel (der Übersichtlichkeit halber hier nicht explizit eingezeichnet) angeordnet, sodass sich eine Strahlrichtung 516 der Hauptdüse 511 und eine Strahlenrichtung 519 der Aufbereitungsdüse 512 in einem gemeinsamen Schnittpunkt innerhalb der konischen Kammer 513 schneiden.

In den Hauptbrenner 518 wird bei diesem Ausführungsbeispiel ohne weitere Luftzufuhr Brennstoff bzw. Kraftstoff aus der Hauptdüse 511 eingespritzt, wobei der Brennstoff in dem Hauptbrenner 518 bereits vorerhitzt und idealerweise thermisch zerlegt werden kann. Hierzu wird die der die Hauptdüse 511 durchströmenden Brennstoffmenge entsprechende Verbrennungsluftmenge in einen Brennraum 526 hinter dem Vorbrenner 517 bzw. dem Hauptbrenner 518 eingeleitet, wozu eine separate Verbrennungsluftzufuhr 504 vorgesehen ist, die in den Brennraum 526 mündet.

Die separate Verbrennungsluftzufuhr 504 ist hierzu an eine Prozessluftzufuhr 521 angeschlossen, wobei von der separaten Verbrennungsluftzufuhr 504 eine weitere Verbrennungsluftzufuhr 522 mit Verbrennungsluft versorgt werden kann, welche hierbei einen Löcherkranz 523 mit Verbrennungsluft versorgt. Der Löcherkranz 523 ist hierbei der Aufbereitungsdüse 512 zugeordnet. Insofern kann der mit der Aufbereitungsdüse 512 eingespritzte Brennstoff zusätzlich mit Prozessluft vermischt in den Vorbrenner 517 bzw. in die konische Kammer 513 des Hauptbrenners 518 eingespritzt werden.

Des Weiteren umfasst die Brennkammer 510, insbesondere der Brennraum 526, eine keramische Baugruppe 506, welche vorteilhafter Weise luftgekühlt ist. Die keramische Baugruppe 506 umfasst hierbei eine keramische Brennkammerwand 507, welche wiederum von einem profilierten Rohr 508 umgeben ist. Um dieses profilierte Rohr 508 erstreckt sich eine Kühlluftkammer 509, die über eine Kühlluftkammerzufuhr 524 mit der Prozessluftzufuhr 521 verbunden ist.

Die an sich bekannten Arbeitszylinder 520 führen entsprechende Arbeitskolben 530, die jeweils mittels Pleuelstangen 535 mit Verdichterkolben 550 mechanisch verbunden sind.

Die Pleuelstangen 535 umfassen in diesem Ausführungsbeispiel Pleuellaufräder 536, welche entlang einer Kurvenbahn 540 laufen, während die Arbeitskolben 530 bzw. die Verdichterkolben 550 bewegt werden. Hierdurch wird eine Abtriebswelle 541 in Rotation versetzt, welche mit der Kurvenbahn 540 mittels eines Antriebskurvenbahnträgers 537 verbunden ist. Über die Abtriebswelle 541 kann eine durch den Axialkolbenmotor 501 erzeugte Leistung abgegeben werden.

In an sich bekannter Weise erfolgt mittels der Verdichterkolben 550 eine Verdichtung der Prozessluft, gegebenenfalls auch einschließlich eines eingespritzten Wassers, welches gegebenenfalls zu einer zusätzlichen Abkühlung genutzt werden kann. Erfolgt die Aufgabe des Wassers oder von Wasserdampf während eines Saughubs des entsprechenden Verdichterkolbens 550, kann speziell eine isotherme Verdichtung des Brennmittels begünstigt werden. Eine mit dem Saughub einhergehende Wasseraufgabe kann eine besonders gleichförmige Verteilung des Wassers innerhalb der Brennmittel auf betrieblich einfache Weise gewährleisten.

Hierdurch können gegebenenfalls Abgase in einem oder mehreren hier nicht dargestellten Wärmeübertragern (siehe aber Figur 5) wesentlich tiefer abgekühlt werden, wenn die Prozessluft über einen oder mehrerer derartiger Wärmeübertrager vorgewärmt und als Brennmittel zur Brennkammer 510 geführt werden soll, wie dies beispielsweise bereits in den vorstehend erläuternden Ausführungsbeispielen hinsichtlich der Figuren 1 bis 5 bereits ausführlich beschrieben ist. Die Abgase können dem oder den Wärmeübertragern über die vorstehend genannten Abgaskanäle 525 zugeführt werden, wobei die Wärmeübertrager axial im Bezug auf den weiteren Axialkolbenmotor 501 angeordnet sind.

Zusätzlich kann die Prozessluft durch einen Kontakt mit weiteren Baugruppen des Axialkolbenmotors 501, welche gekühlt werden müssen, weiter vorgewärmt bzw. erhitzt werden, wie dies ebenfalls bereits erläutert ist. Die auf diese Weise verdichtete und erhitzte Prozessluft wird dann der Brennkammer 510 in bereits erläuterter Weise aufgegeben, wodurch der Wirkungsgrad des weiteren Axialkolbenmotors 501 weiter erhöht werden kann.

Jeder der Arbeitszylinder 520 des Axialkolbenmotors 501 ist über einen Schusskanal 515 mit der Brennkammer 510 verbunden, sodass ein gezündetes Brennmittel-Gemisch bzw. Kraftstoff-Luft-Gemisch aus der Brennkammer 510 heraus über die Schusskanäle 515 in den jeweiligen Arbeitszylinder 520 gelangen und als Arbeitsmedium an den Arbeitskolben 530 Arbeit verrichten kann.

Insofern kann das aus der Brennkammer 510 ausströmende Arbeitsmedium über wenigsten einen Schusskanal 515 sukzessive wenigstens zwei Arbeitszylindern 520 zugeführt werden, wobei je Arbeitszylinder 520 ein Schusskanal 515 vorgesehen ist, der über einen Steuerkolben 531 geschlossen und geöffnet werden kann. Somit ist die Anzahl der Steuerkolben 531 des weiteren Axialkolbenmotors 501 von der Anzahl der Arbeitszylinder 520 vorgegeben. Ein Verschließen des Schusskanals 515 geschieht hierbei über den Steuerkolben 531 auch mit seinem Steuerkolbendeckel 532. Angetrieben wird der Steuerkolben 531 mittels einer Steuerkolbenkurvenbahn 533, wobei ein Abstandhalter 534 für die Steuerkolbenkurvenbahn 533 zu der Antriebwelle 541 vorgesehen ist, der insbesondere auch einer thermischen Entkopplung dient. Im vorliegenden Ausführungsbeispiel des weiteren Axialkolbenmotors 501 kann der Steuerkolben 531 eine im Wesentlichen axial gerichtete Hubbewegung 543 durchführen. Jeder der Steuerkolben 531 ist hierzu mittels nicht weiter bezifferter Gleitsteine, die in der Steuerkolbenkurvenbahn 533 gelagert sind, geführt, wobei die Gleitsteine jeweils einen Sicherungsnocken aufweisen, der in einer nicht weiter bezifferten Führungsnut hin und her läuft und ein Drehen in dem Steuerkolben 531 verhindert.

Da der Steuerkolben 531 im Bereich des Schusskanals 515 mit dem heißen Arbeitsmedium aus der Brennkammer 510 in Kontakt kommt, ist es vorteilhaft, wenn der Steuerkolben 531 wassergekühlt ist. Hierzu weist der weitere Axialkolbenmotor 501 insbesondere im Bereich des Steuerkolbens 531, eine Wasserkühlung 538 auf, wobei die Wasserkühlung 538 innere Kühlkanäle 545, mittlere Kühlkanäle 546 und äußere Kühlkanäle 547 umfasst. Derart gut gekühlt kann der Steuerkolben 531 betriebssicher in einem entsprechenden Steuerkolbenzylinder bewegt werden.

Die Schusskanäle 515 und die Steuerkolben 531 können konstruktiv besonders einfach bereitgestellt werden, wenn der weitere Axialkolbenmotor 501 einen Schusskanalring 539 aufweist. Der Schusskanalring 539 weist hierbei eine Mittelachse auf, um welche konzentrisch herum insbesondere die Teile der Arbeitszylinder 520 und der Steuerkolbenzylinder angeordnet sind. Zwischen jedem Arbeitszylinder 520 und Steuerkolbenzylinder ist ein Schusskanal 515 vorgesehen, wobei jeder Schusskanal 515 räumlich mit einer Ausnehmung (hier nicht beziffert) eines Brennkammerbodens 548 der Brennkammer 510 verbunden ist. Insofern kann das Arbeitsmedium aus der Brennkammer 510 heraus über die Schusskanäle 515 in die Arbeitszylinder 520 hinein gelangen und dort Arbeit verrichten, mittels welcher auch die Verdichterkolben 550 bewegt werden können. Es versteht sich, dass je nach konkreter Ausgestaltung noch Beschichtungen und Einsätze vorgesehen sein können, um insbesondere den Schusskanalring 539 bzw. sein Material vor einem direkten Kontakt mit korrosiven Verbrennungsprodukten oder mit zu hohen Temperaturen zu schützen.

Es versteht sich, dass der weitere Axialkolbenmotor 501 beispielsweise ebenfalls mit wenigstens einem Brennmittelspeicher und entsprechenden Ventilen ausgerüstet werden kann, wobei dies in dem konkreten Ausführungsbeispiel nach der Figur 6 jedoch nicht explizit gezeigt ist.

Auch bei dem weiteren Axialkolbenmotor kann der Brennmittelspeicher in doppelter Ausführung vorgesehen werden, um komprimierte Brennmittel mit unterschiedlichen Drücken speichern zu können. Die zwei vorhandenen Brennmittelspeicher können hierbei an entsprechenden Druckleitungen der Brennkammer 510 angeschlossen sein, wobei die Brennmittelspeicher über Ventile mit den Druckleitungen fluidisch verbindbar oder trennbar sind. Insbesondere können zwischen den Arbeitszylindern 520 bzw. Verdichterzylindern 560 und dem Brennmittelspeicher Absperrventile oder Drosselventile bzw. Regel- oder Steuerventile vorgesehen sein. Beispielsweise können die vorgenannten Ventile bei Anfahr- oder Beschleunigungssituationen sowie zum Starten entsprechend geöffnet oder geschlossen werden, wodurch der Brennkammer 510, zumindest für einen begrenzten Zeitraum, ein Brennmittelüberschuss zur Verfügung gestellt werden kann. Die Brennmittelspeicher sind fluidisch vorzugsweise zwischen einem der Verdichterzylinder und einem der Wärmeübertrager zwischengeschaltet. Die beiden Brennmittelspeicher werden idealerweise mit unterschiedlichen Drücken betrieben, um hierdurch die von dem weiteren Axialkolbenmotor 501 in Form von Druck bereitgestellte Energie sehr gut nutzen zu können. Hierzu können die vorgesehenen Druckobergrenze und Druckuntergrenze am ersten Brennmittelspeicher mittels einer entsprechenden Druckregelung unterhalb der Druckobergrenzen und Druckuntergrenzen des zweiten Brennmittelspeichers eingestellt sein. Es versteht sich, dass hierbei an den Brennmittelspeichern mit unterschiedlichen Druckintervallen gearbeitet werden kann.

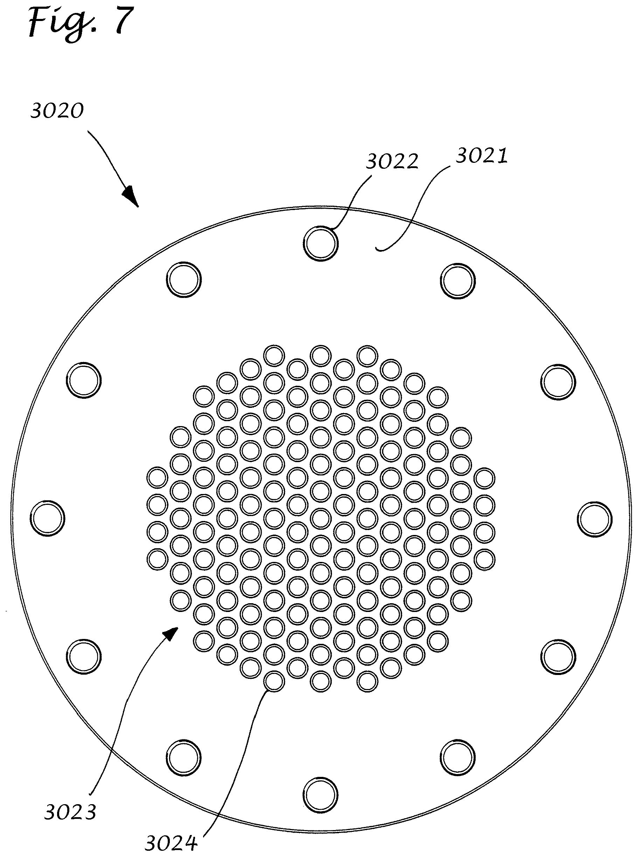

Figur 7 zeigt eine Wärmeübertragerkopfplatte 3020 welche für die Verwendung für einen Wärmeübertrager für einen Axialkolbenmotor, insbesondere für einen Wärmeübertrager nach Figur 5, geeignet ist. Die Wärmeübertragerkopfplatte 3020 umfasst zwecks Montage und Anschluss an einem Auslasskrümmer eines Axialkolbenmotors einen Flansch 3021 mit entsprechenden in einem Lochkreis angeordneten Bohrungen 3022 im radial außen liegenden Bereich der Wärmeübertragerkopfplatte 3020. Im radial innen liegenden Bereich des Flansches 3021 befindet sich die Matrize 3023, welche zahlreiche als Rohrsitze 3024 ausgeführte Bohrungen zur Aufnahme von Rohren, wie Beispielsweise den Röhrchen 872 aus Figur 7, aufweist.

Die gesamte Wärmeübertragerkopfplatte 3020 ist vorzugsweise aus demselben Werkstoff gefertigt, aus welchem auch die Rohre bzw. die Röhrchen 872 gebildet sind, um zu gewährleisten, dass der thermische Ausdehnungskoeffizient im gesamten Wärmeübertrager möglichst homogen ist und hiermit thermische Wärmespannungen im Wärmeübertrager minimiert werden. Kumulativ hierzu kann das Mantelgehäuse des Wärmeübertragers ebenfalls aus einem der Wärmeübertragerkopfplatte 3020 oder den Rohren entsprechenden Werkstoff hergestellt werden. Die Rohrsitze 3024 können beispielsweise mit einer Passung ausgeführt werden, sodass die in diesen Rohrsitzen 3024 montierten Rohre mittels einer Presspassung eingesetzt werden.

Alternativ hierzu können die Rohrsitze 3024 auch derart ausgeführt werden, dass eine Spielpassung oder eine Übergangspassung realisiert wird. Somit kann auch eine Montage der Rohre in den Rohrsitzen 3024 durch eine stoffschlüssige statt einer kraftschlüssigen Verbindung erfolgen. Der Stoffschluss wird hierbei vorzugsweise durch Schweißen oder Löten bewerkstelligt, wobei als Lot oder Schweißwerkstoff ein der Wärmeübertragerkopfplatte 3020 oder den Rohren entsprechender Werkstoff verwendet wird. Dies hat ebenfalls den Vorteil, dass Wärmespannungen in den Rohrsitzen 3024 durch homogene Wärmeausdehnungskoeffizienten minimiert werden können.

Es ist bei dieser Lösung auch möglich, Rohre in den Rohrsitzen 3024 per Presssitz zu montieren und zusätzlich hierzu zu verlöten oder zu verschweißen. Durch diese Art der Montage kann auch eine Dichtigkeit des Wärmeübertragers gewährleistet werden, sofern unterschiedliche Werkstoffe für die Rohre und die Wärmeübertragerkopfplatte 3020 verwendet werden, da die Möglichkeit besteht, dass durch die sehr hohen auftretenden Temperaturen von über 1000°C eine alleinige Verwendung einer Presspassung wegen unterschiedlicher Wärmeausdehnungskoeffizienten unter Umständen versagen kann.

**Bezugszeichenliste:**

| | | | |
|---|---|---|---|
| 201 | Axialkolbenmotor | 427 | Auslass |
| 205 | Gehäusekörper | 430 | Arbeitskolben |
| 210 | Brennkammer | 435 | Pleuelstange |
| 215 | Schusskanal | 440 | Kurvenbahn |
| 220 | Arbeitszylinder | 441 | Abtriebswelle |
| 225 | Abgaskanal | 442 | Abstandhalter |
| 227 | Auslass | 450 | Verdichterkolben |
| 230 | Arbeitskolben | 455 | Druckleitung |
| 235 | Pleuelstange | 456 | Ringkanal |
| 240 | Kurvenbahn | 457 | Zuleitung |
| 241 | Abtriebswelle | 460 | Verdichterzylinder |
| 242 | Abstandhalter | 470 | Wärmeübertrager |
| 250 | Verdichterkolben | 480 | Brennmittelspeicher |
| 255 | Druckleitung | 481 | Speicherleitung |
| 257 | Zuleitung | 482 | Ventil |
| 260 | Verdichterzylinder | 485 | Ventil |
| 270 | Wärmeübertrager | 501 | Axialkolbenmotor |
| 301 | Axialkolbenmotor | 502 | Hauptbrennrichtung |
| 305 | Gehäusekörper | 503 | Symmetrieachse |
| 310 | Brennkammer | 504 | Verbrennungsluftzufuhr |
| 315 | Schusskanal | 505 | Gehäusekörper |
| 320 | Arbeitszylinder | 506 | keramische Baugruppe |
| 325 | Abgaskanal | 507 | keramische Brennkammerwand |
| 370 | Wärmeübertrager | 508 | profiliertes Rohr |
| 401 | Axialkolbenmotor | 509 | Kühlluftkammer |
| 405 | Gehäusekörper | 510 | Brennkammer |
| 410 | Brennkammer | 511 | Hauptdüse |
| 415 | Schusskanal | 512 | Aufbereitungsdüse |
| 420 | Arbeitszylinder | 513 | konische Kammer |
| 425 | Abgaskanal | 514 | zylindrische Kammer |
| 515 | Schusskanal | 543 | Hubbewegung |
| 516 | erste Strahlrichtung | 545 | innere Kühlkanäle |
| 517 | Vorbrenner | 546 | mittlere Kühlkanäle |
| 518 | Hauptbrenner | 547 | äußere Kühlkanäle |
| 519 | weitere Strahlrichtung | 548 | Brennkammerboden |
| 520 | Arbeitszylinder | 550 | Verdichterkolben |
| 521 | Prozessluftzufuhr | 560 | Verdichterzylinder |
| 522 | weitere Verbrennungsluftzufuhr | 592 | Vorkammertemperatursensor |
| 523 | Löcherkranz | 593 | Abgastemperatursensor |
| 524 | Kühlluftkammerzufuhr | 870 | Wärmeübertrager |
| 525 | Abgaskanal | 871 | Abgasraum |
| 526 | Brennraum | 872 | Röhrchen |
| 530 | Arbeitskolben | 873 | Zuluftraum |
| 531 | Steuerkolben | 874 | Abluftraum |
| 532 | Steuerkolbendeckel | 875 | Öffnung |
| 533 | Steuerkolbenkurvenbahn | 876 | Abgaseingang |
| 534 | Abstandhalter | 877 | Abgasausgang |
| 535 | Pleuelstange | 878 | Umlenkplatten |
| 536 | Pleuellaufräder | | |
| 537 | Antriebskurvenbahnträger | 3020 | Wärmeübertragerkopfplatte |
| 538 | Wasserkühlung | 3021 | Flansch |
| 539 | Schusskanalring | 3022 | Montagebohrung |
| 540 | Kurvenbahn | 3023 | Matrize |
| 541 | Abtriebswelle | 3024 | Rohrsitz |

## Patentansprüche

1. Axialkolbenmotor (401) mit einer inneren kontinuierlichen Verbrennung (ikV), mit Verdichterzylindern (460), mit Arbeitszylindern (420), mit einem Auslässe der Verdichterzylinder (460) zusammenfassenden Ringkanal (456) oder Ringkanalteilstück und mit wenigstens einer mit dem Ringkanal (456) oder dem Ringkanalteilstück verbundenen Druckleitung (455), durch welche verdichtetes Brennmittel von den Verdichterzylindern (460) zu den Arbeitszylindern (420) geleitet wird, **gekennzeichnet durch** einen Brennmittelspeicher (480), in welchem verdichtetes Medium zwischengespeichert werden kann, wobei zwischen dem Ringkanal (456) oder Ringkanalteilstück und dem Brennmittelspeicher (480) ein Absperrventil (482) angeordnet ist und wobei in der Druckleitung (455) ein Absperrventil (485) angeordnet ist.

2. Axialkolbenmotor nach Anspruch 1, **dadurch gekennzeichnet, dass** der Brennmittelspeicher (480) zwischen dem Verdichterzylinder (460) und einem Wärmeübertrager (470) vorgesehen ist.

3. Axialkolbenmotor nach Anspruch 2, **dadurch gekennzeichnet, dass** der Wärmeübertrager (470) das verdichtete Brennmittel mittels Abgas aus dem Arbeitszylinder (420) vorwärmt.

4. Axialkolbenmotor nach einem der Ansprüche 1 bis 3, **dadurch gekennzeichnet, dass** der Brennmittelspeicher(480) über das Ventil (482) von der Druckleitung (455) bzw. von den während eines normalen Betriebs Brennmittel führenden Baugruppen trennbar ist.

5. Axialkolbenmotor nach einem der Ansprüche 1 bis 4, **dadurch gekennzeichnet, dass** das Ventil (485) vor dem Wärmeübertrager (470) angeordnet ist.

6. Axialkolbenmotor nach einem der Ansprüche 1 bis 5, **gekennzeichnet durch** mindestens zwei Brennmittelspeicher (480).

7. Axialkolbenmotor nach Anspruch 6, **dadurch gekennzeichnet, dass** die mindestens zwei Brennmittelspeicher (480) mit unterschiedlichen Drücken beladen werden.

8. Axialkolbenmotor nach Anspruch 7, **gekennzeichnet durch** eine Druckregelung, die für den ersten Brennmittelspeicher (480) eine erste Druckuntergrenze und eine erste Druckobergrenze und für den zweiten Brennmittelspeicher (480) eine zweite Druckuntergrenze und eine zweite Druckobergrenze festlegt, innerhalb derer ein Brennmittelspeicher (480) mit Drücken beladen wird, wobei die erste Druckobergrenze unter der zweiten Druckobergrenze und die erste Druckuntergrenze unter der zweiten Druckuntergrenze liegt.

9. Axialkolbenmotor nach Anspruch 8, **dadurch gekennzeichnet, dass** die erste Druckobergrenze kleiner oder gleich der zweiten Druckuntergrenze ist.

10. Verfahren zum Betrieb eines Axialkolbenmotors mit einer inneren kontinuierlichen Verbrennung (ikV) nach einem der vorstehenden Ansprüche, **dadurch gekennzeichnet, dass** der Brennmittelspeicher (480) von Druckleitung (455) bzw. von den während eines normales Betriebs Brennmittel führenden Baugruppen mittels des zwischen dem Ringkanal (456) oder Ringkanalteilstück und dem Brennmittelspeicher (480) angeordneten Absperrventils (482) getrennt werden kann und sich durch das in der Druckleitung (455) angeordnete Absperrventil (485) der Zufluss an Brennmittel durch die Druckleitung (455) regeln bzw. einstellen lässt.

11. Verfahren zum Betrieb eines Axialkolbenmotors nach Anspruch 10, **dadurch gekennzeichnet, dass** das verdichterseitig bereitgestellte Brennmittel unmittelbar direkt in den Brennmittelspeicher gelangt.

12. Verfahren zum Betrieb eines Axialkolbenmotors nach einem der Ansprüche 10 und 11, **dadurch gekennzeichnet, dass** die Brennmittelzufuhr vom Brennmittelspeicher betriebssicher unterbunden wird.

## Claims

1. An axial piston engine (401) with internal continuous combustion (ikV), having compressor cylinders (460), having working cylinders (420), having a ring channel (456), combining outlets of the compressor cylinder (460), or ring-channel section and having at least one pressure line (455) connected to the ring channel (456) or the ring-channel section, by means of which pressure line compressed fuel is conducted from the compressor cylinders (460) to the working cylinders (420), **characterized by** a fuel reservoir (480), in which compressed medium can be buffer-stored, wherein a shut-off valve (482) is arranged between the ring channel (456) or ring-channel section and the fuel reservoir (480) and wherein a shut-off valve (485) is arranged in the pressure line (455).

2. The axial piston engine according to Claim 1, **characterized in that** the fuel reservoir (480) is provided between the compressor cylinder (460) and a heat-transfer medium (470).

3. The axial piston engine according to Claim 2, **characterized in that** the heat-transfer medium (470) preheats the condensed fuel by means of exhaust gas from the working cylinder (420).

4. The axial piston engine according to one of Claims 1 to 3, **characterized in that** the fuel reservoir (480) can be separated, by means of the valve (482), from the pressure line (455) or from the assemblies normally conveying fuel during normal operation.

5. The axial piston engine according to one of Claims 1 to 4, **characterized in that** the valve (485) is arranged upstream of the heat-transfer medium (470).

6. The axial piston engine according to one of Claims 1 to 5, **characterized by** at least two fuel reservoirs (480).

7. The axial piston engine according to Claim 6, **characterized in that** the at least two fuel reservoirs (480) are loaded with different pressures.

8. The axial piston engine according to Claim 7, **characterized by** pressure regulation, which determines a first lower pressure limit and a first upper pressure limit for the first fuel reservoir (480) and a second lower pressure limit and a second upper pressure limit for the second fuel reservoir (480), within which limits a fuel reservoir (480) is loaded with pressures, wherein the first upper pressure limit lies below the second upper pressure limit and the first lower pressure limit lies below the second lower pressure limit.

9. The axial piston engine according to Claim 8, **characterized in that** the first upper pressure limit is lower than or equal to the second lower pressure limit.

10. A method for operating an axial piston engine with internal continuous combustion (ikV) according to one of the preceding claims, **characterized in that** the fuel reservoir (480) can be separated, by means of the shut-off valve (482) arranged between the ring channel (456) or ring-channel section and the fuel reservoir (480), from the pressure line (455) or from the assemblies conveying fuel during normal operation, and the supply of fuel through the pressure line (455) can be regulated or set by means of the shut-off valve (485) arranged in the pressure line (455).

11. The method for operating an axial piston engine according to Claim 10, **characterized in that** the fuel provided on the compressor side makes it directly into the fuel reservoir.

12. The method for operating an axial piston engine according to one of Claims 10 and 11, **characterized in that** the fuel supply from the fuel reservoir is prevented in an operationally reliable manner.

## Revendications

1. Moteur à pistons axiaux (401) avec une combustion interne continue (ikV), avec des cylindres de compresseur (460), avec des cylindres de travail (420), avec un conduit annulaire (456) ou partie de conduit annulaire réunissant des sorties des cylindres de compresseur (460) et avec au moins conduite sous pression (455) reliée au conduit annulaire (456) ou à la partie de conduit annulaire à travers laquelle un agent combustible comprimé est dirigé des cylindres de compresseur (460) vers les cylindres de travail (420), **caractérisé par** un réservoir d'agent combustible (480) dans lequel un milieu comprimé peut être stocké temporairement, une soupape d'arrêt (482) étant disposée entre le conduit annulaire (456) ou la partie de conduit annulaire et le réservoir d'agent combustible (480) et une soupape d'arrêt (485) étant disposée dans la conduite sous pression (455).

2. Moteur à pistons axiaux selon la revendication 1, **caractérisé en ce que** le réservoir d'agent combustible (480) est prévu entre le cylindre de compresseur (460) et un échangeur de chaleur (470).

3. Moteur à pistons axiaux selon la revendication 2, **caractérisé en ce que** l'échangeur de chaleur (470) préchauffe l'agent combustible comprimé au moyen de gaz d'échappement venant du cylindre de travail (420).

4. Moteur à pistons axiaux selon l'une quelconque des revendications 1 à 3, **caractérisé en ce que** le réservoir d'agent combustible (480) peut être séparé par la soupape (482) de la conduite sous pression (455) ou des modules gérant l'agent combustible pendant un fonctionnement normal.

5. Moteur à pistons axiaux selon l'une quelconque des revendications 1 à 4, **caractérisé en ce que** la soupape (485) est disposée avant l'échangeur de chaleur (470).

6. Moteur à pistons axiaux selon l'une quelconque des revendications 1 à 5, **caractérisé par** au moins deux réservoirs d'agent combustible (480).

7. Moteur à pistons axiaux selon la revendication 6, **caractérisé en ce qu'**au moins deux réservoirs d'agent combustible (480) sont chargés à des pressions différentes.

8. Moteur à pistons axiaux selon la revendication 7, **caractérisé par** une régulation de pression, qui définit une première limite inférieure de pression et une première limite supérieure de pression pour le premier réservoir d'agent combustible (480) et une deuxième limite inférieure de pression et une deuxième limite supérieure de pression pour le deuxième réservoir d'agent combustible (480) à l'intérieure de laquelle un réservoir d'agent combustible (480) est chargé avec des pressions, la première limite supérieure de pression se situant sous la deuxième limite supérieure de pression et la première limite inférieure de pression sous la deuxième limite inférieure de pression.

9. Moteur à pistons axiaux selon la revendication 8, **caractérisé en ce que** la première limite supérieure de pression est plus petite ou égale à la deuxième limite inférieure de pression.

10. Procédé destiné à faire fonctionner un moteur à pistons axiaux avec une combustion intérieure continue (ikV) selon l'une quelconque des revendications précédentes, **caractérisé en ce que** le réservoir d'agent combustible (480) peut être séparé de la conduite sous pression (455) ou des modules gérant l'agent combustible pendant un fonctionnement normal au moyen de la soupape d'arrêt (482) disposée entre le conduit annulaire (456) ou partie de conduit annulaire et le réservoir d'agent combustible (480) et l'alimentation en agent combustible par la conduite sous pression (455) peut régulée ou réglée par la soupape d'arrêt (485) disposée dans la conduite sous pression (455).

11. Procédé destiné à faire fonctionner un moteur à pistons axiaux selon la revendication 10, **caractérisé en ce que** l'agent combustible fourni côté compresseur parvient directement dans le réservoir d'agent combustible.

12. Méthode destinée à faire fonctionner un moteur à pistons axiaux selon l'une quelconque des revendications 10 et 11, **caractérisé en ce que** l'alimentation en agent combustible est interrompue depuis le réservoir d'agent combustible de façon sécurisée du point de vue fonctionnement.
